# FASCICULE DE BREVET EUROPEEN

(11) **EP 4 608 610 B1**
(45) Date de publication et mention de la délivrance du brevet: **02.12.2026**
(21) Numéro de dépôt: 23798525.4
(22) Date de dépôt: 27.10.2023
(51) Int. Cl.: B25J 9/00, A61F 5/04

(54) **EXOSQUELETTE D'ASSISTANCE DES MOUVEMENTS DE LA TÊTE**
EXOSKELETT ZUR UNTERSTÜTZUNG VON KOPFBEWEGUNGEN
EXOSKELETON FOR ASSISTING HEAD MOVEMENTS

(30) Priorité: 28.10.2022 FR 2211247
(43) Date de publication de la demande: 03.09.2025
(73) Titulaire: SNCF Voyageurs, 93200 Saint-Denis (FR)
(72) Inventeur: GIOVANELLI, Yonnel, 94700 Maisons-Alfort (FR); CHEYNET, Yann, 91220 Le Plessis Pâté (FR); FRAZAO, Pascal, 60130 Saint Just-en-Chaussée (FR); FERAUD, Philippe, 91630 Marolles en Hurepoix (FR); MOREL, Arnaud, 62360 La Capelle les Boulogne (FR); BERARD, Bruno, 77550 Moissy-Cramayel (FR)
(74) Mandataire: Fache, Sébastien
(86) Numéro de dépôt international: PCT/IB2023/060850
(87) Numéro de publication internationale: WO 2024/089658

(56) Documents cités:
- DE-A1- 102019 104 344
- FR-A1- 3 019 973
- US-A1- 2019 070 058
- US-A1- 2020 121 543

## Description

### DOMAINE TECHNIQUE

L'invention s'inscrit dans le domaine des systèmes d'assistance physique des mouvements du corps humain, et plus particulièrement dans le domaine des exosquelettes d'assistance physique des mouvements de la tête d'un utilisateur portant un tel exosquelette.

### ART ANTERIEUR ET INCONVENIENTS DE L'ART ANTERIEUR

Dans de nombreuses situations, la plupart du temps liées à l'activité professionnelle, les individus doivent régulièrement maintenir leur tête en position d'extension - c'est-à-dire regarder vers le haut - ce qui entraine la compression des vertèbres cervicales sous la tension des muscles de la nuque et sous le poids du crâne. Ces extensions répétées et prolongées entrainent à terme des douleurs cervicales, voire des lésions.

Il est connu des systèmes d'appui tête - tel que celui décrit dans la publication FR 3019973 - comprenant un repose tête et un support dorsal relié entre eux par des moyens de liaison élastique, et des moyens de maintien du support dorsal sur le haut du corps de l'utilisateur. Ces moyens de maintien comprennent des bretelles recouvrant le buste de l'utilisateur et une ceinture entourant sa taille, les bretelles et la ceinture étant elles-mêmes reliées entre-elles par des sangles de réglage.

Un inconvénient de ces systèmes de l'art antérieur réside dans le nombre important de sangles utilisées. Ces dernières sont parfois complexes à installer et engendre des zones d'appui sur le haut du corps et la taille.

### OBJECTIF DE L'INVENTION

L'invention vise donc à proposer un exosquelette d'assistance des mouvements d'extension de la tête simple à installer, peu encombrant et ergonomique.

### EXPOSE DE L'INVENTION

À cet effet, l'invention vise un exosquelette d'assistance des mouvements d'extension de la tête d'un porteur, comprenant des moyens de maintien au buste dudit porteur et un dispositif d'accompagnement d'un mouvement d'extension de la tête du porteur comportant un appui-tête et des moyens de rappel élastique aptes à exercer une force de compensation dudit mouvement d'extension appliquée sur au moins une portion de l'appui-tête, caractérisé en ce que les moyens de maintien comprennent une armature articulée, des points de support de l'armature contre le dos et contre le thorax du porteur, et des moyens de mise à distance de l'armature des épaules du porteur lorsque ce dernier est équipé de l'exosquelette.

L'exosquelette peut également comporter les caractéristiques optionnelles suivantes considérées isolément ou selon toutes les combinaisons techniques possibles, l'invention étant toutefois définie par les caractéristiques de la revendication 1 :
- L'armature comprend deux branches articulées principales aptes à s'étendre de part et d'autre des cervicales du porteur équipé de l'exosquelette depuis une extrémité libre dorsale jusqu'à une extrémité libre thoracique.
- Les branches principales comprennent chacune une partie centrale, une partie dorsale et une partie thoracique, lesquelles parties dorsale et thoracique sont respectivement reliées aux extrémités opposées de la partie centrale via des articulations pivot, les parties dorsale et thoracique étant mobile entre une position déployée et une position repliée.
- Les moyens de mise à distance de l'armature des épaules du porteur comprennent des moyens d'amenée des parties dorsale et thoracique de chaque branche principale vers leur position repliée.
- Les extrémités libres dorsales de chacune des deux branches principales sont solidarisées entre elles en formant une unique extrémité dorsale, et en ce que chacune des extrémités libres thoraciques des deux branches principales forment deux extrémités thoraciques distinctes.
- L'exosquelette comprend deux branches secondaires, chacune s'étendant depuis une extrémité solidaire de l'unique extrémité dorsale des branches principales jusqu'à une extrémité libre costale.
- Chaque extrémité libre dorsale et thoracique des deux branches principales et chaque extrémité libre costale des deux branches secondaires est reliée à un plot de contact monté de manière articulé par l'intermédiaire d'une articulation rotule en formant partie d'un point de support.
- Chaque point de support comprend un organe de réglage de l'espacement entre le plot de contact et l'extrémité correspondante de branche.
- Le dispositif d'accompagnement comprend en outre un support de l'appui-tête relié à l'armature et aux moyens de rappel. Ceci permet de séparer totalement le rôle de l'appui-tête de celui du support et des moyens de rappel puisque la force de rappel est localisé au niveau du support.
- Le support est un dispositif de liaison articulé de l'appui-tête à l'armature. Ceci améliore le mouvement de l'appui tête tout en assurant le transfert optimal de la force de rappel entre le support et l'appui-tête.
- Le dispositif de liaison articulé de l'appui-tête à l'armature comprend une rotule solidaire dudit appui-tête, un organe de réception de la rotule dans lequel ladite rotule est libre à rotation, et une pièce de liaison de l'organe de réception à l'armature. Ce type de structure articulaire offre une grande liberté de mouvement de l'appui-tête par rapport au reste de l'armature.
- Les moyens de rappel comprennent un organe élastique dont les extrémités sont respectivement solidaires de la rotule et de la pièce de liaison de l'organe de réception à l'armature. Cette structure se caractérise par sa simplicité et sa compacité.
- La pièce de liaison comprend une extrémité solidaire de l'organe de réception et une extrémité opposée solidaire des extrémités dorsales des branches articulées principales. Le mouvement étant limité à la rotule, le contrôle et la précision du rappel est amélioré.
- La pièce de liaison comprend des moyens de réglage télescopiques.
- L'appui tête comprend un arceau de réception de la tête du porteur solidaire du support. Cette structure offre un meilleur contact avec le crane du porteur.
- L'arceau comprend des moyens de réglage de son rayon de courbure. Ceci offre une meilleur efficacité du transfert des force de rappel et un meilleur confort.
- L'appui-tête est une poche élastiquement déformable remplie d'un fluide.
- L'appui-tête comprend des moyens de modification de la pression à l'intérieur de la poche, lesquels moyens de modification de pression forment les moyens d'ajustement de l'écartement entre les branches, et en ce les moyens de rappel élastique sont aptes à exercer une force de traction à l'encontre de l'écartement des branches provoqué par le mouvement d'extension de la tête du porteur.
- Les moyens d'ajustement de l'écartement entre les branches comprennent un dispositif d'écartement monté à coulissement sur les deux branches en regard de leurs extrémités libres dorsales, lequel dispositif d'écartement comprend des moyens d'écartement desdites branches lors du coulissement dudit dispositif dans un sens, et des moyens de rapprochement des branches lors du coulissement dudit dispositif dans le sens opposé, et en ce que les moyens de rappel élastique comprennent un réceptacle de la poche qui est solidaire du dispositif d'écartement et qui comprend au moins un organe de rappel élastique apte à exercer une force de compression sur la poche lors du mouvement d'extension de la tête du porteur.

### PRESENTATION DES FIGURES

D'autres caractéristiques et avantages de l'invention ressortiront clairement de la description qui en est donnée ci-dessous, à titre indicatif et nullement limitatif, en référence aux figures annexées parmi lesquelles :
[Fig. 1] La figure 1 représente une vue de côté de l'exosquelette de l'invention selon un premier mode de réalisation ;
[Fig. 2] La figure 2 représente une vue d'une partie dorsale de l'exosquelette de la figure 1 porté par le porteur ;
[Fig. 3] La figure 3 représente une vue en perspective d'une variante de réalisation de l'exosquelette de la figure 1 ;
[Fig. 4] La figure 4 représente une vue de côté de l'exosquelette de l'invention selon un second mode de réalisation ;
[Fig .5] La figure 5 représente une vue en perspective de la pièce d'écartement des branches de l'exosquelette de la figure 4 ;
[Fig .6] La figure 6 représente une vue schématique des moyens de rappel élastique de l'exosquelette de la figure 4 ;
[Fig .7] La figure 7 représente une vue schématique en coupe longitudinale du dispositif d'accompagnement de l'exosquelette de l'invention ;
[Fig .8] La figure 8 représente une vie en perspective depuis l'arrière de l'exosquelette de l'invention selon un troisième mode de réalisation ;
[Fig .9] La figure 9 représente une vie en perspective depuis l'avant de l'exosquelette de la figure 8 ;
[Fig .10] La figure 10 représente un détail du dispositif d'accompagnement d'un mouvement d'extension de la tête du porteur de l'exosquelette des figures 8 et 9 ;
[Fig .11] La figure 11 représente une vue schématique de face du dispositif d'accompagnement d'un mouvement d'extension de la tête du porteur des figures 8 à 10 ;

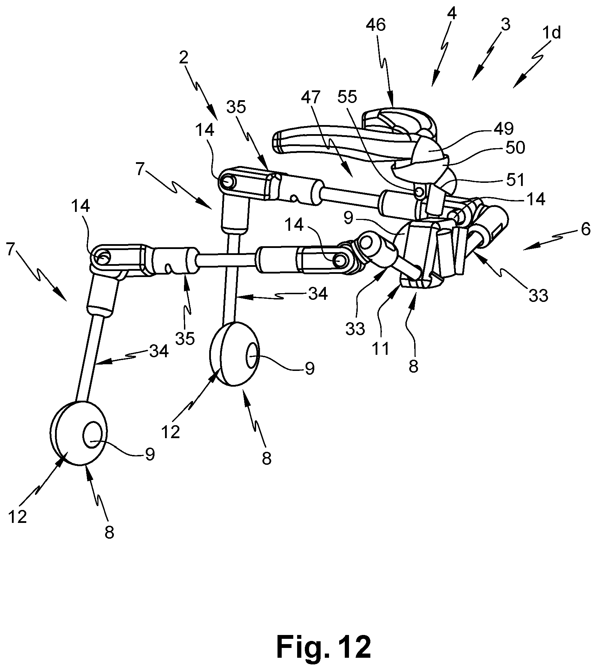

[Fig. 12] La figure 12 représente une vie en perspective de l'exosquelette de l'invention selon une variante du troisième mode de réalisation ;

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement trois modes de réalisation de l'objet de l'invention mais qu'il peut exister d'autres modes de réalisation qui répondent à la définition de l'invention.

L'invention porte sur un exosquelette cervical 1a, 1b, 1c, 1d prévu pour être installé sur le buste d'un porteur et pour accompagner les mouvements d'extension de la tête dudit porteur.

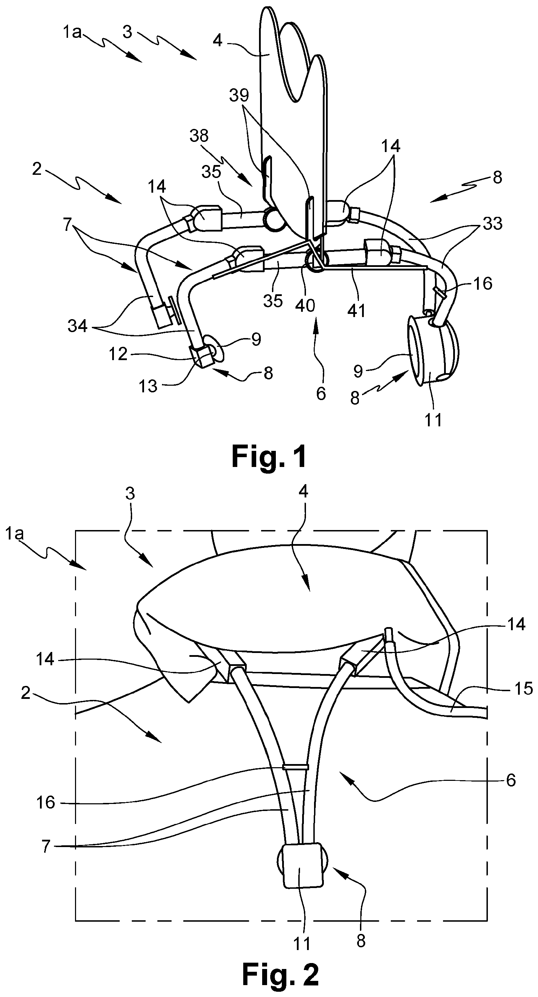

En référence aux figures 1 à 4, l'exosquelette cervical 1a, 1b va être décrit selon deux premiers modes de réalisation. L'exosquelette 1a, 1b comprend d'une part des moyens de maintien 6 au buste d'un porteur dudit exosquelette 1a, 1b, et d'autre part un dispositif d'accompagnement 3 de tout mouvement d'extension de la tête du porteur équipé dudit exosquelette 1a, 1b.

Par buste, on entend la partie supérieure du corps comprise entre la tête et la taille du porteur. En corollaire, les moyens de maintien 6 de l'exosquelette 1a, 1b selon l'invention ne coopèrent pas avec les parties du corps du porteur situées au niveau de et sous la taille.

Selon l'invention, les moyens de maintien 6 sur le buste du porteur comprennent une armature articulée 2, par exemple réalisée en aluminium, laquelle armature 2 comprend deux branches principales courbées ou coudées 7 qui s'étendent, lorsque le porteur est équipé de l'exosquelette 1a, 1b, au-dessus des épaules du porteur de part et d'autre de ses cervicales. Ainsi, chaque branche principale 7 s'étend depuis une extrémité libre dorsale 11 jusqu'à une extrémité libre thoracique 12 lorsque le porteur est équipé de l'exosquelette 1a, 1b, laquelle extrémité libre thoracique 12 est prévue pour venir en appui contre le thorax du porteur de l'exosquelette 1a, 1b, plus précisément sous l'une de ses clavicules.

Par ailleurs, pour améliorer le maintien des branches principales 7 sur le buste du porteur, les extrémités libres dorsales desdites branches principales 7 sont solidarisées entre-elles pour former une unique extrémité dorsale 11, tandis que les extrémités libres thoraciques des deux branches principales 7 forment deux extrémités thoraciques distinctes 12.

De manière avantageuse, chaque branche principale 7 est formée d'une partie dorsale indéformable coudée 33 comprenant l'extrémité dorsale 11, d'une partie thoracique indéformable coudée 34 comprenant l'extrémité thoracique 12, et d'une partie centrale indéformable 35 sensiblement rectiligne dont les extrémités sont respectivement reliées à pivotement aux parties thoracique 34 et dorsale 33 par l'intermédiaire d'une articulation pivot 14. De fait, les parties dorsale 33 et thoracique 34 sont mobiles à pivotement par rapport à la partie centrale 35 entre une position déployée et une position repliée.

Par ailleurs, des moyens d'amenée des parties dorsale 33 et thoracique 34 de chaque branche principale 7 vers leur position repliée sont ménagés entre lesdites parties dorsale 33 et thoracique 34. Ces moyens d'amenée sont par exemple un ressort ou un élastique 41 qui ont tendance à resserrer comme une pince la branche principale considérée 7.

En outre, de manière à adapter la longueur des parties centrales 35 des branches principales 7 en fonction de la morphologie du porteur, lesdites parties centrales 35 sont télescopiques et les moyens de maintien 6 comprennent de fait des organes d'ajustement de la longueur de chaque branche (non représentés) Classiquement, chaque partie centrale 35 de la branche principale considérée 7 comprend un premier tube monté coulissant dans un second tube, et les organes d'ajustement sont par exemple des verrous ou des bagues de blocage du mouvement du premier tube par rapport au second tube.

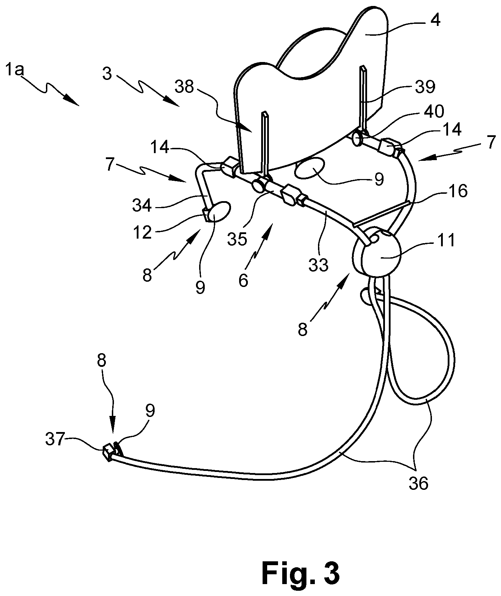

De manière optionnelle et en référence à la figure 3, l'exosquelette 1a, 1b comprend deux branches secondaires 36 qui s'étendent de part et d'autre du buste du porteur équipé de l'exosquelette 1a, 1b, chacune s'étendant depuis l'unique extrémité dorsale 11 des branches principales 7 jusqu'à une extrémité libre costale 37. Les extrémités libres costales 37 des branches secondaires 36 sont prévues pour venir en appui latéral contre le buste du porteur, au niveau des côtes flottantes. Chaque branche secondaire 36 est formée d'un tube courbé articulé pour faciliter son positionnement sur le porteur. Ces branches secondaires 36 permettent d'accompagner encore davantage les efforts du porteur, tout en respectant l'ergonomie de l'exosquelette 1a, 1b et en évitant l'ajout de sangles qui pourraient générer des points de contention.

Les moyens de maintien 6 comprennent des points de support 8 de l'armature 2 contre le dos et le thorax du porteur. Ces points de support 8, ménagés aux extrémités thoraciques 12 et à l'extrémité dorsale 11 des branches principales 7 et aux extrémités costales 37 des branches secondaires 36, comprennent des plots de contact 9 montés de manière articulée par l'intermédiaire d'une articulation rotule 10 sur chaque extrémité thoracique 12 ou dorsale 11. Plus précisément, chaque extrémité thoracique 12 ou dorsale 11 est reliée à un plot de contact 9, lui-même monté sur une articulation rotule 10 solidaire de l'extrémité considérée 11, 12. De la sorte, toute la surface de contact de chaque plot de contact 9 est en appui contre le thorax ou le dos du porteur lorsque celui-ci est équipé de l'exosquelette 1a, 1b.

En outre, chaque point de support 8 comprend un organe de réglage 13 de l'espacement entre le plot de contact 9 et l'extrémité correspondante 11, 12 de la branche 7. Ainsi, chaque point de support 8 comprend un plot de contact 9 solidaire de l'organe de réglage correspondant 13, lequel organe de réglage 13 est solidaire d'une rotule qui est emmanchée dans un logement ménagé dans l'extrémité correspondante 11, 12, 37 de branche 7, 36 - la rotule et le logement formant l'articulation rotule 10.

Les organes de réglages 13 permettent donc, compte tenu du fait qu'au moins les branches principales 7 sont rigides, d'ajuster la force de contact de chaque plot 9 contre le dos et le thorax du porteur, et le cas échant contre les côtes du porteur. Lorsque le porteur est équipé de l'exosquelette 1a, 1b, les branches principales 7 sont donc solidarisées au buste dudit porteur par un effet de pince par l'action conjuguée de la rigidité des branches principales 7, des moyens d'amenée 41 et de l'appui de contact des plots 9 contre le dos et le thorax de l'utilisateur, lequel appui de contact est réglable via les organes de réglage 13.

Par ailleurs et de manière particulièrement avantageuse, cet effet de pince permet, pour le porteur équipé de l'exosquelette 1a, 1b, de maintenir les branches principales 7 à distance des épaules dudit porteur. Les branches principales 7 ne forment donc aucun point d'appui sur les épaules de l'utilisateur de part et d'autre des cervicales, c'est à dire ni sur le haut du dos ni sur les trapèzes du porteur. Le caractère rigide des branches principales 7, les organes de réglage 13 de l'espacement entre les plots de contact 9 et les extrémités 11, 12, 37 des branches 7, 36, les moyens d'amenée 41 et les organes d'ajustement de la longueur des parties centrales 35 des branches principales 7 forment des moyens de mise à distance de l'armature 2 des épaules du porteur lorsque ce dernier est équipé de l'exosquelette 1a, 1b.

Ainsi, les moyens de maintien 6 de l'exosquelette 1a, 1b selon l'invention ne provoquent aucun inconfort au porteur. En outre, la surface de contact entre les moyens de maintien 6 et le buste du porteur étant limitée aux plots de contact 9, les mouvements du porteur n'ont pas d'influence sur le réglage des branches 7, 36 et des points de support 8. L'exosquelette 1a, 1b reste donc bien en place sur le porteur, quels que soient ses mouvements.

Le dispositif d'accompagnement 3 des mouvements d'extension de la tête du porteur de l'exosquelette 1a, 1b comprend un appui-tête 4 solidaire de l'armature 2 et positionné de telle sorte que, lorsque le porteur équipé de l'exosquelette 1a, 1b effectue un mouvement d'extension de la tête, sa nuque vient en appui de contact contre l'appui-tête 4, qui est une poche élastiquement déformable remplie d'un fluide, notamment un gaz ou un gel. Plus précisément, le dispositif d'accompagnement 3 comprend un support 38 de l'appui-tête 4 comprenant un réceptacle 39 dudit appui-tête 4 et des moyens de liaison 40 aux parties centrales 35 des branches principales 7. Avantageusement, le support 38 est mobile à pivotement autour d'un axe perpendiculaire aux parties centrales 35 des branches principales 7 et à translation le long desdites parties centrales 35 pour permettre le positionnement optimal de l'appui-tête 4 par rapport à la morphologie du porteur. Dans la suite de la description, on utilisera le terme « poche » pour désigner l'appui-tête 4. La poche 4 s'étend selon un axe longitudinal X qui est perpendiculaire à l'axe de la nuque du porteur lorsque ce dernier est équipé de l'exosquelette 1a, 1b.

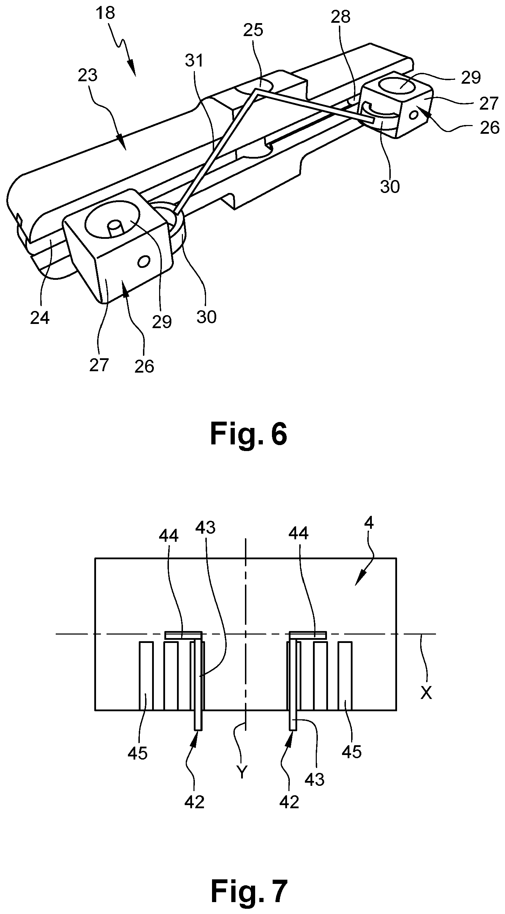

De manière particulièrement avantageuse et en référence à la figures 7, la poche 4 comprend des fourreaux 45 disposés le long de la poche 4, qui s'étendent transversalement à la poche 4 et dans lesquels des éléments de mise en forme 42 de la poche 4 peuvent être insérés. Ces éléments de mise en forme 42 présentent chacun une forme de **L,** avec une jambe de maintien dans le fourreau 43 et une jambe de mise en forme de la poche 44.

Une fois les éléments de mise en forme 42 mis en place dans la poche, c'est-à-dire que la jambe de maintien 43 est logée dans le fourreau considéré 45 et la jambe de mise en forme 44 est dans la poche 4 en s'étendant selon l'axe X, le porteur imprime un mouvement de pivotement à la jambe de maintien 43 pour faire pivoter la jambe de mise en forme 44 autour d'un axe transversal Y de la poche 4 : la rotation des deux élément de mise en forme 42 a pour effet de modifier la courbure de la poche 4 et donc d'ajuster au mieux la poche 4 autour de la nuque du porteur.

Par ailleurs, la présence de plusieurs fourreaux 45 disposés côte à côte le long de la poche 4 permet d'augmenter ou de diminuer la distance entre les deux éléments de mise en forme 42 en fonction de la morphologie du porteur : la courbure de la poche 4 est donc ajustable sur la nuque du porteur quelle que soit la morphologie de ce dernier.

Le dispositif d'accompagnement 3 des mouvements d'extension de la tête du porteur de l'exosquelette 1a, 1b comprend en outre des moyens de rappel élastique 16, 17 qui sont aptes à exercer une force de compensation de tout mouvement d'extension de la tête du porteur, laquelle force de compensation est exercée sur au moins une portion de la poche 4. Typiquement, lorsque le porteur équipé de l'exosquelette 1a, 1b effectue un mouvement d'extension de la tête, la déformation de la poche 4 générée par l'appui de la nuque contre ladite poche 4 est contenue par les moyens de rappel élastique 16, 17. La poche 4 et les moyens de rappel élastique 16, 17 exercent donc, en combinaison, une fonction de maintien de la tête en extension du porteur.

Enfin, de manière à améliorer encore le confort et l'ergonomie de l'exosquelette 1a, 1b pour le porteur, les moyens de maintien comprennent des moyens d'ajustement de l'écartement entre les branches principales 7.

En référence aux figures 1 à 3, le dispositif d'accompagnement 3 et les moyens d'écartement des branches 7 de l'exosquelette 1a de l'invention vont être plus précisément décrit selon le premier mode de réalisation.

Dans ce mode de réalisation, la poche 4 est gonflée avec un gaz, en particulier avec de l'air, et comprend des moyens de modification de la pression interne 15 de la poche 4 actionnable par le porteur, par exemple via une pompe manuelle reliée fluidiquement à la poche 4. La pompe permet donc au porteur de contrôler l'augmentation ou la diminution de la quantité d'air à l'intérieur de la poche 4.

Ainsi, lorsque le porteur s'équipe avec l'exosquelette 1a, ce dernier modifie la pression à l'intérieur de la poche 4 pour régler l'écartement entre les branches 7 et ajuster au mieux ledit écartement à sa morphologie. Plus la poche 4 est gonflée, plus les branches 7 tendent à s'écarter. La pompe reliée à la poche 4 et qui assure la modification de la pression interne de la poche 4 forme donc les moyens d'ajustement de l'écartement entre lesdites branches principales 7.

Par ailleurs et comme représenté sur la figure 2, les moyens de rappel élastique 16 sont formés par un élément du type ressort dont les extrémités opposées sont respectivement solidaires des deux branches 7 coté dos, entre l'extrémité dorsale 11 et les organes d'ajustement de la longueur des branches.

De fait, lorsque le porteur équipé de l'exosquelette 1a déplace sa tête en extension, la pression exercée sur la poche 4 a tendance à la déformer et à modifier l'écartement initial des branches 7, lequel écartement initial est défini comme l'écartement entre les branches 7 lorsque la poche 4 n'est pas déformée par la tête du porteur. Cette modification de l'écartement provoque la déformation du ressort 16 qui exerce donc une force antagoniste tendant à ramener les deux branches 7 vers leur position d'écartement initial. Cette force antagoniste est exercée sur la poche 4 au niveau du support 38, et vient soutenir la tête en extension du porteur au niveau de sa nuque.

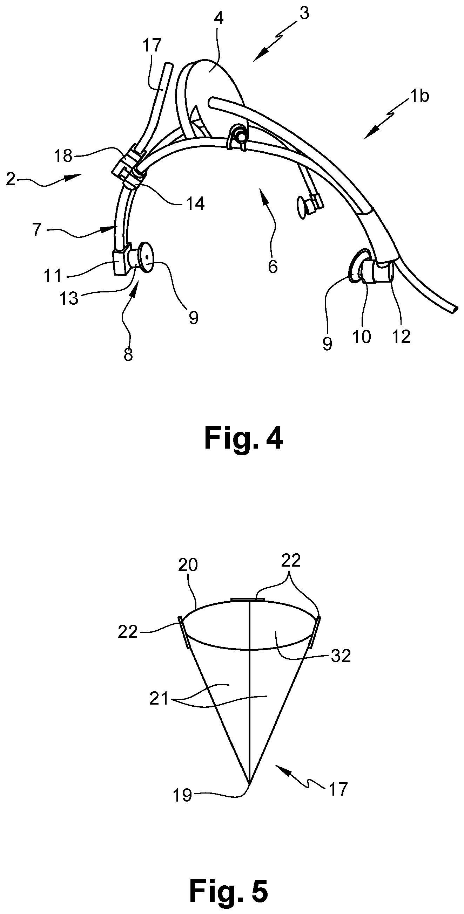

En référence au figures 4 à 6, le dispositif d'accompagnement 3 et les moyens d'écartement des branches de l'exosquelette 1b de l'invention vont être plus précisément décrits selon le second mode de réalisation.

Dans ce second mode de réalisation, la poche 4 est gonflé d'air ou d'un gel, et préférentiellement la pression à l'intérieur de la poche 4 n'est pas modifiable par le porteur si la poche est gonflée de gel.

En référence à la figure 5, les moyens de rappel élastique sont formés par un réceptacle creux élastiquement déformable 17, de forme pyramidale dont le sommet 19 est solidaire d'un dispositif d'écartement 18 des branches principales 7 monté à coulissement sur les deux branches principales 7 en regard de l'extrémité dorsale 11 - le sommet 19 du réceptacle pyramidal 17 est par exemple logé dans un orifice 25 ménagé dans la pièce rectiligne 23 - et dont la base forme une ouverture déformable 32 de réception de la poche 4 qui vient en appui contre une bordure 20 de cette ouverture 32. Typiquement, ce réceptacle 17 est formé de trois ou quatre pièces planes triangulaires 21 reliées entre elles de manière à former le réceptacle pyramidal 17. Alternativement, la forme du réceptacle 17 est conique.

Les pièces planes 21 du réceptacle 17 sont maintenues entre elles au niveau de la bordure 20 par des moyens de liaison élastique 22 qui forment des organes de rappel élastique - par exemple des élastiques ou des ressorts de traction. Ces organes de rappel élastique 22 tendent à empêcher l'élargissement de l'ouverture 32 du réceptacle 17, et donc à minimiser la surface de cette ouverture 32.

De fait, lorsque le porteur équipé de l'exosquelette 1b déplace sa tête en extension, la pression exercée sur la poche 4 a tendance à la déformer et à élargir l'ouverture 32 du réceptacle 17. Cet élargissement provoque l'extension des élastiques ou des ressorts 22 qui exercent donc une force antagoniste tendant à rétrécir l'ouverture 32, dont la bordure 20 exerce une force contre la poche 4 tendant à redonner à ladite poche 4 sa forme initiale. Cette force exercée contre la poche 4 vient soutenir la tête en extension du porteur au niveau de sa nuque.

En référence à la figure 6, le dispositif d'écartement 18 comprend une pièce rectiligne 23 comprenant une rainure longitudinale 24 qui s'étend sur toute la longueur de ladite pièce rectiligne 23.

En outre, le dispositif d'écartement 18 comprend deux pièces de liaison 26 des branches 7 à la pièce rectiligne 23, chaque pièce de liaison 26 comprenant une portion formant tenon 28 logé dans la rainure 24 de la pièce rectiligne 23 et solidarisé à ladite pièce rectiligne 23, ainsi qu'une portion de liaison à coulissement 27 à la branche correspondante 7, laquelle portion de liaison à coulissement 27 comprend un orifice traversant 29 traversé par ladite branche 7.

Ainsi, chaque pièce de liaison 26 est reliée à coulissement à chaque branche 7 et est également solidarisée à la pièce rectiligne 23 de sorte que la distance entre les deux pièces 27 est invariante.

Pour régler l'écartement des branches 7, le porteur fait simplement coulisser le dispositif d'écartement 18 le long des branches 7 : le coulissement du dispositif d'écartement 18 en direction de l'extrémité dorsale 11 provoque l'écartement des branches 7, tandis que le coulissement du dispositif d'écartement 18 dans le sens opposé provoque le rapprochement des branches 7.

Enfin, le dispositif d'écartement 18 comprend un élément de centrage de la poche 4 relié au réceptacle 17 et à une oreille 30 faisant saillie de chaque pièce de liaison 26 du dispositif d'écartement 18 - par exemple un ressort de traction 31 - qui assure un écartement ou un rapprochement symétrique des branches 7 par rapport à un axe passant par l'extrémité dorsale 11 de l'armature 2 et par le centre de la poche 4.

De manière alternative dans ce second mode de réalisation, les moyens d'ajustement de l'écartement entre les branches principales sont les mêmes que pour le premier mode de réalisation décrit en lien avec les figures 1 et 2, c'est-à-dire que, lorsque le porteur s'équipe avec l'exosquelette 1b, ce dernier modifie la pression d'air à l'intérieur de la poche 4 pour régler l'écartement entre les branches 7 et ajuster au mieux ledit écartement à sa morphologie. Plus la poche 4 est gonflée, plus les branches 7 tendent à s'écarter. La pompe et les organes d'ajustement de la longueur des branches 14 forment donc les moyens d'ajustement de l'écartement entre lesdites branches 7. Dans ce cas, le réceptacle creux élastiquement déformable 17 est solidaire de l'extrémité dorsale 11.

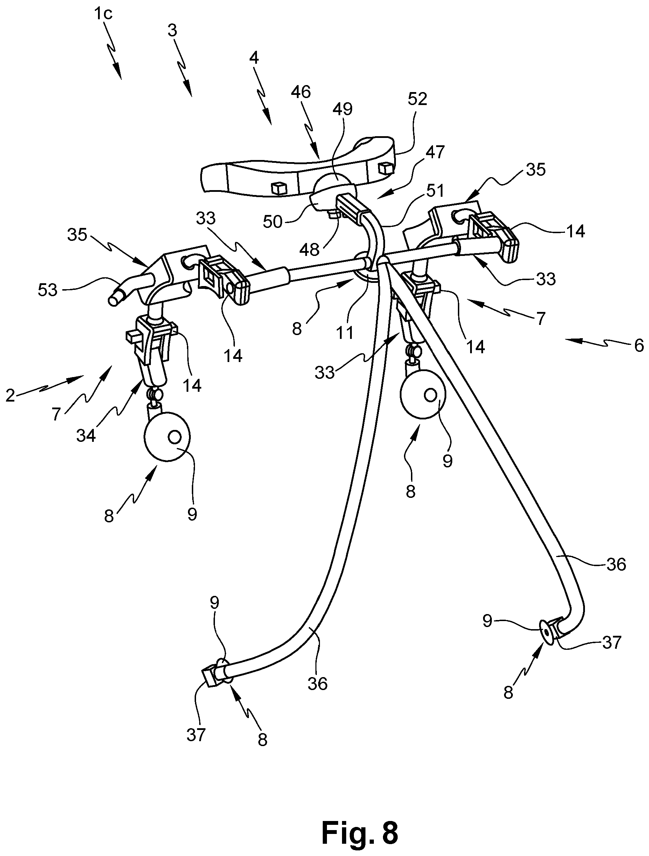

En référence au figures 8 à 11, l'exosquelette 1c de l'invention, et plus particulièrement l'appui-tête 4, vont être décrits selon le troisième mode de réalisation.

A l'instar des deux premiers mode de réalisation, l'exosquelette 1c selon ce troisième mode de réalisation comprend un dispositif d'accompagnement des mouvement de la tête du porteur 3 et une armature articulée 2 comprenant deux branches principales 7 qui s'étendent depuis une extrémité libre dorsale 11 jusqu'à une extrémité libre thoracique 12 lorsque le porteur est équipé de l'exosquelette, les deux branches 7 étant solidarisées entre elles au niveau de leurs extrémités libres dorsales pour former une unique extrémité dorsale 11.

Chaque branche principale 7 est formé d'une partie dorsale 33 comprenant l'extrémité dorsale 11, d'une partie thoracique 34 comprenant l'extrémité thoracique 12 et d'une partie centrale 35 reliant les parties thoraciques et dorsale via des articulations pivot 14. De fait et à l'instar des autres modes de réalisation, les parties dorsale 33 et thoracique 34 sont mobiles à pivotement par rapport à la partie centrale 35 entre une position déployée et une position repliée. En particulier, les articulations 14 comprennent des moyens de blocage des branches 7 dans leur position choisie (dépliée ou déployée).

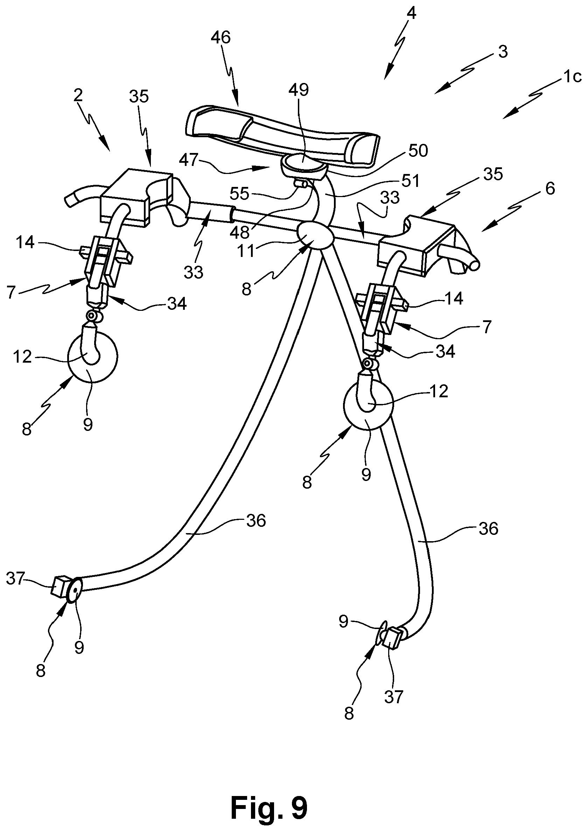

En référence aux figures 8 et 9, la partie dorsale 33 de chaque branche 7 est formée d'un tube télescopique avec crans de blocage qui permet de régler la longueur de ladite partie dorsale 33 et ainsi de régler de manière optimale l'armature 2 sur les épaules du porteur.

En outre, la partie centrale 35 de chaque branche 7 est réglable de manière à adapter les branches 7 à la morphologie du porteur. La partie centrale 35 comprend également une saillie de fixation 53 prévue pour coopérer avec un autre exosquelette (non représenté) prévu pour accompagner les mouvements des membres supérieurs du porteur.

De manière optionnelle et toujours en référence aux figures 8 et 9, le troisième mode de réalisation de l'exosquelette 1c comprend - comme les deux premiers modes de réalisation de l'exosquelette 1a, 1b - deux branches secondaires 36 qui s'étendent de part et d'autre du buste du porteur équipé de l'exosquelette 1c, chacune s'étendant depuis l'unique extrémité dorsale 11 des branches principales 7 jusqu'à une extrémité libre costale 37. Les extrémités libres costales 37 des branches secondaires 36 sont prévues pour venir en appui latéral contre le buste du porteur, au niveau des côtes flottantes. Chaque branche secondaire 36 est formée d'un tube courbé articulé pour faciliter son positionnement sur le porteur. Ces branches secondaires 36 permettent d'accompagner encore davantage les efforts du porteur, tout en respectant l'ergonomie de l'exosquelette 1c et en évitant l'ajout de sangles qui pourraient générer des points de contention.

Enfin, les moyens de maintien 6 de l'exosquelette 1c comprennent des points de support 8 de l'armature contre le dos et le thorax de l'utilisateur. Ces points de supports 8 sont identiques à ceux décrits en lien avec les premier et second mode de réalisation d'exosquelettes 1a, 1b.

Le dispositif d'accompagnement 3 des mouvements d'extension de la tête du porteur de l'exosquelette 1c comprend un appui-tête 4 solidaire de l'armature 2. Plus précisément, le dispositif d'accompagnement 3 comprend un support 47 de l'appui-tête 4 relié à l'armature 2 et aux moyens de rappel 48.

Le support 47 est un dispositif de liaison articulé de l'appui-tête 4 à l'armature 2 et comprend une rotule 49 solidaire de l'appui tête 4, un organe de réception 50 de la rotule 49 - en particulier un coussinet 50 - dans lequel ladite rotule 49 est libre à rotation, et une pièce de liaison 51 de l'organe de réception 50 à l'armature 2, laquelle pièce de liaison 51 s'étend parallèlement à la nuque du porteur équipé de l'exosquelette 1c et comporte une extrémité solidaire de l'organe de réception 50 et une extrémité opposée solidaire de l'extrémité dorsale 11 des deux branches principales 7. Pour augmenter le confort et adapter l'appui-tête 4 à n'importe quel porteur, la pièce de liaison 51 est formée d'un tube télescopique pour en régler la longueur. En outre, la pièce de liaison 51 est coudée, pour améliorer le confort et la surface de contact entre l'appui-tête 4 et le porteur.

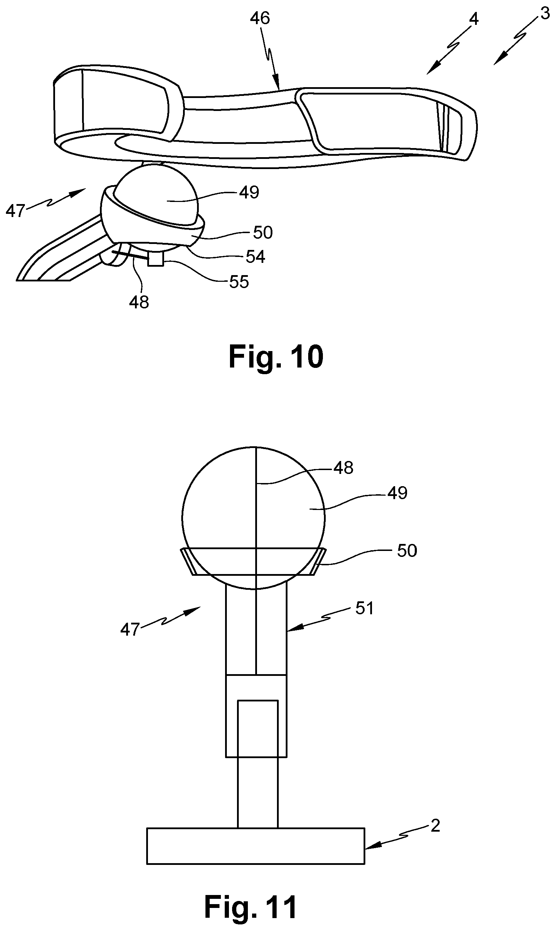

En référence à la figure 10, la rotule 49 comprend une saillie sensiblement cylindrique 55, tandis que le logement de la rotule 49 ménagé dans l'organe de réception 50 comprend une ouverture traversante 54 : de la sorte, lorsque la rotule 49 est engagée dans l'organe de réception 50, une partie de la rotule 49 traverse l'ouverture traversante 54 de l'organe de réception 50 et en particulier la saillie cylindrique 55.

L'appui-tête 4 quant à lui comprend un arceau de réception 46 de la tête du porteur et s'étend selon un axe longitudinal qui est perpendiculaire à l'axe de la nuque du porteur lorsque ce dernier est équipé de l'exosquelette 1c, lequel arceau 46 est solidaire du support 47 et plus particulièrement de la rotule 49. Pour permettre l'ajustement de l'arceau 46 sur la tête du porteur, ledit arceau 46 comprend des moyens de réglage de son rayon de courbure 52.

Enfin, les moyens de rappel 48 comprennent un organe élastique dont les extrémités sont solidaires respectivement de la saillie cylindrique 55 de la rotule 49 et de la pièce de liaison 51. De la sorte, l'organe élastique 48 s'étend également parallèlement à l'axe de la nuque du porteur.

L'organe élastique 48 a, dans ce dernier mode de réalisation de l'exosquelette, une triple fonction.

En premier lieu, comme pour les moyens de rappel des deux autres modes de réalisation de l'exosquelette 1a, 1b, l'organe élastique 48 de l'exosquelette 1c selon le troisième mode de réalisation exerce une force de compensation du mouvement d'extension de la tête du porteur appliquée sur au moins une portion de l'appui-tête 4.

En second lieu, l'organe de rappel 48 exerce une force de contact de l'arceau 46 contre la tête du porteur. Ainsi, dès que le porteur est équipé de l'exosquelette 1c, l'organe de rappel élastique 48 va assurer la mise au contact de l'arceau 46 contre la tête du porteur.

En troisième lieu, et en référence à la figure 11, l'organe élastique 48, la rotule 49, l'organe de réception 50 et la pièce de liaison 51 sont tous disposés selon un axe principal parallèle à l'axe de la nuque du porteur. Ainsi, l'organe élastique 48 permet de s'opposer à un pivotement de l'arceau 46 provoqué par exemple par un mouvement de flexion latérale de la tête du porteur, et de ramener l'arceau 46 selon une position perpendiculaire à l'axe de la nuque du porteur.

Le porteur est donc naturellement amené à redresser sa tête lorsqu'il est équipé de l'exosquelette 1c, et corolairement, le porteur ressent - via une tension de l'organe élastique 48 selon une composante perpendiculaire à l'axe de la nuque - que l'exosquelette 1c doit être mieux positionné sur lui.

En référence à la figure 12, une seconde variante de l'exosquelette cervical 1d selon le troisième mode de réalisation va maintenant être décrit.

Cette seconde variante du troisième mode de réalisation possède une structure proche de l'exosquelette 1c, c'est-à-dire que le dispositif d'accompagnement 3 des mouvements d'extension de la tête est sensiblement identique au dispositif d'accompagnement 3 de la première variante de l'exosquelette 1c selon le troisième mode de réalisation.

La différence de structure tient dans les branches principales 7 de l'armature articulée 2 de cette seconde variante d'exosquelette 1d selon le troisième mode de réalisation.

Chaque branche principale 7 s'étend depuis une extrémité libre dorsale 11 jusqu'à une extrémité libre thoracique 12 lorsque le porteur est équipé de l'exosquelette, les deux branches 7 étant solidarisées entre elles au niveau de leurs extrémités libres dorsales pour former une unique extrémité dorsale 11.

Chaque branche principale 7 est formée d'une partie dorsale 33 comprenant l'extrémité dorsale 11, d'une partie thoracique 34 comprenant l'extrémité thoracique 12 et d'une partie centrale 35 reliant les parties thoraciques et dorsale via des articulations pivot 14. De fait et à l'instar des autres modes de réalisation, les parties dorsale 33 et thoracique 34 sont mobiles à pivotement par rapport à la partie centrale 35 entre une position déployée et une position repliée. En particulier, les articulations 14 sont crantées, ce qui assure le maintien des branches dans leur position choisie (dépliée ou déployée).

La partie dorsale 33 de chaque branche 7 est formée d'un tube télescopique avec crans de blocage qui permet de régler la longueur de ladite partie dorsale 33 et ainsi de régler de manière optimale l'armature 2 sur les épaules du porteur. En outre, les parties dorsales sont inclinées et s'étendent depuis leur extrémité dorsale commune 11 symétriquement par rapport à l'axe de la nuque du porteur. En d'autres termes, les angles formés entre l'axe de nuque et la partie dorsale des deux branches respectives sont identiques, ces deux angles étant aigus. Ceci facilite la mise en place et le confort de port de l'exosquelette 1d sur le porteur.

En outre, la partie centrale 35 de chaque branche 7 est réglable de manière à adapter les branches 7 à la morphologie du porteur. La partie centrale 35 peut également comprendre une saillie de fixation (non représentée) prévue pour coopérer avec un autre exosquelette (non représenté) prévu pour accompagner les mouvements des membres supérieurs du porteur.

Enfin, les moyens de maintien 6 de l'exosquelette 1d comprennent des points de support 8 de l'armature contre le dos et le thorax de l'utilisateur. Ces points de supports 8 sont identiques à ceux décrits en lien avec les premier et second mode de réalisation d'exosquelettes 1a, 1b, 1c.

De manière optionnelle non représentée, cette seconde variante du troisième mode de réalisation de l'exosquelette 1d comprend - comme les autres modes de réalisation de l'exosquelette 1a, 1b, 1c - deux branches secondaires 36 qui s'étendent de part et d'autre du buste du porteur équipé de l'exosquelette 1d, chacune s'étendant depuis l'unique extrémité dorsale 11 des branches principales 7 jusqu'à une extrémité libre costale 37.

## Revendications

1. Exosquelette (1) d'assistance des mouvements d'extension de la tête d'un porteur, comprenant des moyens de maintien au buste (6) dudit porteur, comprenant un dispositif d'accompagnement d'un mouvement d'extension de la tête du porteur (3) comportant un appui-tête (4) et des moyens de rappel élastique (16, 17, 48) aptes à exercer une force de compensation dudit mouvement d'extension appliquée sur au moins une portion de l'appui-tête (4), lesquels moyens de maintien (6) comprennent une armature articulée (2), des points de support (8) de l'armature (2) contre le dos et contre le thorax du porteur, et des moyens de mise à distance de l'armature (2) des épaules du porteur lorsque ce dernier est équipé de l'exosquelette (1).

2. Exosquelette (1) selon la revendication précédente, **caractérisé en ce que** l'armature (2) comprend deux branches articulées principales (7) aptes à s'étendre de part et d'autre des cervicales du porteur équipé de l'exosquelette depuis une extrémité libre dorsale (11) jusqu'à une extrémité libre thoracique (12).

3. Exosquelette (1) selon la revendication précédente, **caractérisé en ce que** les branches principales (7) comprennent chacune une partie centrale (35), une partie dorsale (33) et une partie thoracique (34), lesquelles parties dorsale (33) et thoracique (34) sont respectivement reliées aux extrémités opposées de la partie centrale (35) via des articulations pivot (14), les parties dorsale (33) et thoracique (34) étant mobile entre une position déployée et une position repliée.

4. Exosquelette selon la revendication précédente, **caractérisé en ce que** les moyens de mise à distance de l'armature (2) des épaules du porteur comprennent des moyens d'amenée des parties dorsale (33) et thoracique (34) de chaque branche principale (7) vers leur position repliée.

5. Exosquelette (1) selon l'une quelconque des revendications 2 à 4, **caractérisé en ce que** les extrémités libres dorsales de chacune des deux branches principales (7) sont solidarisées entre elles en formant une unique extrémité dorsale (11), et **en ce que** chacune des extrémités libres thoraciques (12) des deux branches principales (7) forment deux extrémités thoraciques distinctes (12).

6. Exosquelette selon la revendication précédente, **caractérisé en ce qu'**il comprend deux branches secondaires (36), chacune s'étendant depuis une extrémité solidaire de l'unique extrémité dorsale (11) des branches principales (7) jusqu'à une extrémité libre costale (37).

7. Exosquelette (1) selon la revendication précédente, **caractérisé en ce que** chaque extrémité libre dorsale (11) et thoracique (12) des deux branches principales (7) et chaque extrémité libre costale des deux branches secondaires (36) est reliée à un plot de contact (9) monté de manière articulée par l'intermédiaire d'une articulation rotule (10) en formant partie d'un point de support (8).

8. Exosquelette (1) selon la revendication précédente, **caractérisé en ce que** chaque point de support (8) comprend un organe de réglage (13) de l'espacement entre le plot de contact (9) et l'extrémité correspondante (11, 12) de branche (7, 36).

9. Exosquelette (1) selon l'une quelconque des revendications précédentes, **caractérisé en ce que** le dispositif d'accompagnement (3) comprend en outre un support (38, 47) de l'appui-tête (4) relié à l'armature (2) et aux moyens de rappel (48).

10. Exosquelette (1) selon la revendication précédente, **caractérisé en ce que** le support est un dispositif de liaison articulé (47) de l'appui-tête (4) à l'armature (2).

11. Exosquelette (1) selon la revendication précédente, **caractérisé en ce que** le dispositif de liaison articulé (47) de l'appui-tête (4) à l'armature (2) comprend une rotule (49) solidaire dudit appui-tête (46), un organe de réception (50) de la rotule (49) dans lequel ladite rotule (49) est libre à rotation, et une pièce de liaison (51) de l'organe de réception (50) à l'armature (2).

12. Exosquelette (1) selon la revendication précédente, **caractérisé en ce que** les moyens de rappel (48) comprennent un organe élastique dont les extrémités sont respectivement solidaires de la rotule (49) et de la pièce de liaison (51) de l'organe de réception (50) à l'armature (2).

13. Exosquelette (1) selon la revendication 2 et la revendication 10 ou 11, **caractérisé en ce que** la pièce de liaison (51) comprend une extrémité solidaire de l'organe de réception (50) et une extrémité opposée solidaire des extrémités dorsales (11) des branches articulées principales (7).

14. Exosquelette (1) selon l'une quelconque des revendications 10 à 12, **caractérisé en ce que** la pièce de liaison (51) comprend des moyens de réglage télescopiques.

15. Exosquelette selon l'une quelconque des revendications 9 à 14, **caractérisé en ce que** l'appui tête (4) comprend un arceau de réception (46) de la tête du porteur solidaire du support (47).

16. Exosquelette (1) selon la revendication précédente, **caractérisé en ce que** l'arceau (46) comprend des moyens de réglage de son rayon de courbure (52).

## Patentansprüche

1. Exoskelett (1) zur Unterstützung der Streckbewegungen des Kopfes eines Trägers, mit Haltevorrichtungen am Oberkörper (6) des Trägers, mit einer Vorrichtung zur Begleitung einer Streckbewegung des Kopfes des Trägers (3), die eine Kopfstütze (4) und elastische Rückstellvorrichtungen (16, 17, 48), die geeignet sind, eine Ausgleichskraft für die genannte Streckbewegung auszuüben, die auf mindestens einen Abschnitt der Kopfstütze (4) wirkt, wobei die Haltevorrichtungen (6) einen gelenkigen Rahmen (2) umfassen, Stützpunkte (8) des Gestells (2) am Rücken und am Brustkorb des Trägers sowie Mittel zum Halten eines Abstands des Gestells (2) zu den Schultern des Trägers, wenn dieser das Exoskelett (1) trägt.

2. Exoskelett (1) nach dem vorstehenden Anspruch, **dadurch gekennzeichnet, dass** der Rahmen (2) zwei gelenkige Hauptarme (7) umfasst, die sich zu beiden Seiten der Halswirbelsäule des mit dem Exoskelett ausgestatteten Trägers von einem freien dorsalen Ende (11) bis zu einem freien thorakalen Ende (12) erstrecken können.

3. Exoskelett (1) nach dem vorstehenden Anspruch, **dadurch gekennzeichnet, dass** die Hauptschenkel (7) jeweils einen Mittelabschnitt (35), einen Rückenabschnitt (33) und einen Brustabschnitt (34) umfassen, wobei der Rückenabschnitt (33) und der Brustabschnitt (34) jeweils über Schwenkgelenke (14) mit den gegenüberliegenden Enden des Mittelabschnitts (35) verbunden sind, wobei der Rückenabschnitt (33) und der Brustabschnitt (34) zwischen einer ausgefahrenen und einer eingeklappten Position beweglich sind.

4. Exoskelett nach dem vorstehenden Anspruch, **dadurch gekennzeichnet, dass** die Mittel zum Abstandshalten des Gerüsts (2) von den Schultern des Trägers Mittel zum Bewegen des Rückenabschnitts (33) und des Brustabschnitts (34) jedes Hauptarms (7) in ihre zusammengeklappte Position umfassen.

5. Exoskelett (1) nach einem der Ansprüche 2 bis 4, **dadurch gekennzeichnet, dass** die freien Rückenenden jedes der beiden Hauptarme (7) miteinander verbunden sind und ein einziges Rückenende (11) bilden, und dadurch, dass jedes der freien thorakalen Enden (12) der beiden Hauptarme (7) zwei getrennte thorakale Enden (12) bildet.

6. Exoskelett nach dem vorstehenden Anspruch, **dadurch gekennzeichnet, dass** es zwei Nebenarme (36) umfasst, die sich jeweils von einem mit dem einzigen dorsalen Ende (11) der Hauptarme (7) verbundenen Ende bis zu einem freien kostalen Ende (37) erstrecken.

7. Exoskelett (1) nach dem vorstehenden Anspruch, **dadurch gekennzeichnet, dass** jedes freie dorsale (11) und das freie thorakale Ende (12) der beiden Hauptarme (7) sowie jedes freie kostale Ende der beiden Nebenarme (36) mit einem Kontaktstift (9) verbunden ist, der über ein Kugelgelenk (10) gelenkig angebracht ist und Teil eines Stützpunkts (8) bildet.

8. Exoskelett (1) nach dem vorstehenden Anspruch, **dadurch gekennzeichnet, dass** jeder Stützpunkt (8) ein Einstellelement (13) zum Einstellen des Abstands zwischen dem Kontaktstift (9) und dem entsprechenden Ende (11, 12) des Schenkels (7, 36) umfasst.

9. Exoskelett (1) nach einem der vorstehenden Ansprüche, **dadurch gekennzeichnet, dass** die Führungsvorrichtung (3) ferner eine Halterung (38, 47) für die Kopfstütze (4) umfasst, die mit dem Rahmen (2) und den Rückstellmitteln (48) verbunden ist.

10. Exoskelett (1) nach dem vorstehenden Anspruch, **dadurch gekennzeichnet, dass** die Halterung eine gelenkige Verbindungsvorrichtung (47) der Kopfstütze (4) mit dem Rahmen (2) ist.

11. Exoskelett (1) nach dem vorstehenden Anspruch, **dadurch gekennzeichnet, dass** die gelenkige Verbindungsvorrichtung (47) der Kopfstütze (4) mit dem Rahmen (2) ein Kugelgelenk (49) umfasst, das fest mit der Kopfstütze (46) verbunden ist, ein Aufnahmeteil (50) für das Kugelgelenk (49), in dem das Kugelgelenk (49) frei drehbar ist, und ein Verbindungsteil (51) zwischen dem Aufnahmeteil (50) und dem Rahmen (2).

12. Exoskelett (1) nach dem vorstehenden Anspruch, **dadurch gekennzeichnet, dass** die Rückstellmittel (48) ein elastisches Element umfassen, dessen Enden jeweils fest mit dem Kugelgelenk (49) und dem Verbindungsteil (51) zwischen dem Aufnahmeteil (50) und dem Rahmen (2) verbunden sind.

13. Exoskelett (1) nach Anspruch 2 und Anspruch 10 oder 11, **dadurch gekennzeichnet, dass** das Verbindungsteil (51) ein mit dem Aufnahmeteil (50) fest verbundenes Ende und ein gegenüberliegendes Ende aufweist, das fest mit den rückseitigen Enden (11) der Hauptgelenkschenkel (7) verbunden ist.

14. Exoskelett (1) nach einem der Ansprüche 10 bis 12, **dadurch gekennzeichnet, dass** das Verbindungsteil (51) teleskopische Einstellvorrichtungen umfasst.

15. Exoskelett nach einem der Ansprüche 9 bis 14, **dadurch gekennzeichnet, dass** die Kopfstütze (4) einen mit der Halterung (47) fest verbundenen Aufnahmebügel (46) für den Kopf des Trägers umfasst.

16. Exoskelett (1) nach dem vorstehenden Anspruch, **dadurch gekennzeichnet, dass** der Bügel (46) Mittel (52) zur Einstellung seines Krümmungsradius umfasst.

## Claims

1. Exoskeleton (1) designed to assist the wearer's head extension movements, comprising means for securing the wearer's torso (6), comprising a device for guiding the wearer's head extension movement (3) comprising a headrest (4) and elastic return means (16, 17, 48) capable of exerting a compensating force against said extension movement, applied to at least a portion of the headrest (4), which support means (6) comprise an articulated frame (2), support points (8) for the frame (2) against the wearer's back and chest, and means for spacing the frame (2) away from the wearer's shoulders when the wearer is wearing the exoskeleton (1).

2. Exoskeleton (1) according to the preceding claim, wherein the frame (2) comprises two main articulated arms (7) capable of extending on either side of the wearer's cervical spine whilst the wearer is wearing the exoskeleton, from a free dorsal end (11) to a free thoracic end (12).

3. Exoskeleton (1) as per the preceding claim, wherein the main arms (7) each comprise a central section (35), a dorsal section (33) and a thoracic section (34), which dorsal (33) and thoracic (34) sections are respectively connected to the opposite ends of the central section (35) via pivot joints (14), the dorsal (33) and thoracic (34) sections being movable between an extended position and a folded position.

4. Exoskeleton according to the preceding claim, wherein the means for spacing the frame (2) from the wearer's shoulders comprise means for guiding the dorsal (33) and thoracic (34) parts of each main arm (7) towards their folded position.

5. An exoskeleton (1) according to any one of claims 2 to 4, wherein the free dorsal ends of each of the two main arms (7) are joined together to form a single dorsal end (11), and in that each of the thoracic free ends (12) of the two main arms (7) forms two distinct thoracic ends (12).

6. Exoskeleton according to the preceding claim, wherein it comprises two secondary arms (36), each extending from an end integral with the single dorsal end (11) of the main arms (7) to a free costal end (37).

7. Exoskeleton (1) according to the preceding claim, wherein each free dorsal (11) and thoracic (12) free ends of the two main arms (7) and each costal free end of the two secondary arms (36) is connected to a contact pad (9) mounted in an articulated manner by means of a ball-and-socket joint (10), forming part of a support point (8).

8. Exoskeleton (1) according to the preceding claim, wherein each support point (8) comprises an adjustment member (13) for adjusting the spacing between the contact pad (9) and the corresponding end (11, 12) of the arm (7, 36).

9. Exoskeleton (1) according to any one of the preceding claims, wherein the support device (3) further comprises a support (38, 47) for the headrest (4) connected to the frame (2) and to the return means (48).

10. Exoskeleton (1) according to the preceding claim, wherein the support is an articulated coupling device (47) for connecting the headrest (4) to the frame (2).

11. Exoskeleton (1) according to the preceding claim, wherein the articulated coupling device (47) connecting the headrest (4) to the frame (2) comprises a ball joint (49) integral with said headrest (46), a receptacle (50) for the ball joint (49), within which said ball joint (49) is free to rotate, and a connecting member (51) connecting the receptacle (50) to the frame (2).

12. Exoskeleton (1) according to the preceding claim, wherein the return means (48) comprise an elastic member whose ends are respectively integral with the ball joint (49) and the connecting piece (51) linking the receiving member (50) to the frame (2).

13. Exoskeleton (1) according to claim 2 and claim 10 or 11, wherein the connecting member (51) comprises one end integral with the receiving member (50) and an opposite end integral with the dorsal ends (11) of the main articulated arms (7).

14. Exoskeleton (1) according to any one of claims 10 to 12, wherein the connecting member (51) comprises telescopic adjustment means.

15. Exoskeleton according to any one of claims 9 to 14, wherein the headrest (4) comprises a head-receiving hoop (46) integral with the support (47).

16. Exoskeleton (1) according to the preceding claim, wherein the hoop (46) comprises means (52) for adjusting its radius of curvature.
